# EUROPEAN PATENT SPECIFICATION

(11) **EP 0 922 486 B1**
(45) Date of publication and mention of the grant of the patent: **23.08.2006**
(21) Application number: 97913497.0
(22) Date of filing: 02.12.1997
(51) Int. Cl.: B01D 71/44, B29C 41/12, B01D 71/72, C08J 9/28

(54) **MICROPOROUS MEMBRANES AND PROCESS FOR THE PRODUCTION THEREOF**
MIKROPORÖSE MEMBRANEN UND VERFAHREN ZU IHRER HERSTELLUNG
MEMBRANES MICROPOREUSES ET PROCEDE DE FABRICATION CORRESPONDANT

(30) Priority: 02.12.1996 JP 32182196; 02.12.1996 JP 32182296
(43) Date of publication of application: 16.06.1999
(73) Proprietor: FUJI PHOTO FILM CO., LTD., Minami-Ashigara-shi, Kanagawa 250-0123 (JP)
(72) Inventor: SHINAGAWA, Yukio, Fuji Photo Film Co., Ltd., Minami-Ashigara-shi, Kanagawa 250-01 (JP); OHTANI, Sumio, Fuji Photo Film Co., Ltd., Minami-Ashigara-shi, Kanagawa 250-01 (JP)
(74) Representative: Grünecker, Kinkeldey, Stockmair & Schwanhäusser Anwaltssozietät
(86) International application number: PCT/JP1997/004406
(87) International publication number: WO 1998/024540

(56) References cited:
- JP-A- 5 148 413
- JP-A- 7 196 736
- JP-A- 51 151 275
- JP-A- 53 076 172
- US-A- 5 468 819
- PATENT ABSTRACTS OF JAPAN vol. 002, no. 024 (C-003), 16 February 1978 (1978-02-16) -& JP 52 122278 A (JAPAN SYNTHETIC RUBBER CO LTD), 14 October 1977 (1977-10-14) -& DATABASE WPI Section Ch, Derwent Publications Ltd., London, GB; Class A18, AN 1977-83841y XP002126509 -& CHEMICAL ABSTRACTS, vol. 88, no. 20, 15 May 1978 (1978-05-15) Columbus, Ohio, US; abstract no. 138615, XP002126507
- PATENT ABSTRACTS OF JAPAN vol. 002, no. 089 (C-018), 21 July 1978 (1978-07-21) -& JP 53 048975 A (JAPAN SYNTHETIC RUBBER CO LTD), 2 May 1978 (1978-05-02) -& DATABASE WPI Section Ch, Derwent Publications Ltd., London, GB; Class A18, AN 1978-42792a XP002126510 -& CHEMICAL ABSTRACTS, vol. 89, no. 12, 18 September 1978 (1978-09-18) Columbus, Ohio, US; abstract no. 90864, XP002126508
- PATENT ABSTRACTS OF JAPAN vol. 011, no. 096 (C-412) 26 March 1987 & JP 61 249 502 A (SUMITOMO ELECTRIC IND LTD) 06 November 1986 & DATABASE WPI Week 198651, Derwent Publications Ltd., London, GB; Class A14, AN 1986-334898 & JP 61 249 502 A (SUMITOMO ELECTRIC IND CO) 06 November 1986

## Description

### TECHNICAL FIELD

The present invention relates to a microporous membrane and a process for producing the same and more specifically to a microporous membrane which can be used for microfiltration and has excellent resistance to chemicals.

### TECHNICAL BACKGROUND

Microporous membranes have been known since old times (for example, R. Kesting, Synthetic Polymeric Membranes, McGraw Hill) and have widely served as filters and so forth.

The microporous membranes are used for the filtration and sterilization of washing water for electronics, water for pharmaceuticals, water for manufacturing processes of pharmaceuticals, and water for foods. In recent years, the application and consumption of the membranes are being expanded, and particularly, highiy reliable microporous membranes receive attention and are in wide use for the purpose of capturing particles.

JP-A-51 51275 is directed to a semi-permeable membrane prepared by manufacturing a film from a polymer of norbornene derivative containing a alkali metal salt, an ammonium salt or an amium salt of a carboxylic group in the molecule or a copolymer for a norbornene derivative with a cycloalkene.

JP-A-5 148413 discloses a film formed by casting a fluid prepared by disolving or dispersing 50 to 100% by weight of a hydrogenated polymer prepared by conducting ring opening polymerization of a monomer comprising at least one norbornene derivative, and 0 to 50% by weight of a rubbery polymer and/or a thermoplastic resin.

JP-A-53 048974 is directed to a method for manufacturing a separation membrane comprising casting a solution of a polymer of a norbornene derivative containing a carboxyl group or a copolymer of a norbornene derivative with a cycloalkene disolved in the mono- or di-alkyl N-substituent of an organic acid amine with one or two carbon atoms into the form of a thin film and thereafter forming a film by immersing the cast product in a non-solvent prior to complete evaporation of the solvent.

### TECHNICAL PROBLEM

The development of filters which have high resistance to chemical liquids such as acids, alkalis, and oxidizing agents with undergoing little extraction has been recently expected in the production of semiconductors. Filters formed of polytetrafluoroethylene (PTFE) as a material have been mainly used for the filtration of such chemical liquids recently, see e.g. JP 61 249 502 A. However, the PTFE filters show high hydrophobic nature, and even when the filters are wetted with 2-propanol prior to filtration, the air lock caused by the invasion of a trace of air bubbles obstructs the filtration. In addition, the filters have the disadvantage of generating poisonous gases by the combustion of used filters in waste disposal.

Specifically speaking, polyethylene has poor thermal resistance and polysulfonic acid has poor resistance to chemicals.

It is the object of the present invention to provide a microporous membrane having excellent resistance to chemicals, facilitating waste disposal and having excellent thermal resistance. It is further the object of the present invention to provide a process for producing such a membrane.

### DISCLOSURE OF THE INVENTION

These objects have been achieved by a microporous membrane which has a bubble point value measured by the use of ethanol falling in the range of from 10 kPa to 1000 kPa, preferably in the range of from 10 kPa to 500 kPa and most preferably in the range of from 100 kPa to 300 kPa and comprises a polymer prepared by ring opening polymerization of a compound represented by chemical formula (I) described in claim 1.

Concrete means of achieving the objects are described below.
1. A microporous membrane which has a bubble point value measured by the use of ethanol by the test method of JIS K3832 falling in the range of from 10 kPa to 1000 kPa and is formed of a polymer prepared by ring opening polymerization of a compound represented by the following chemical formula (I): 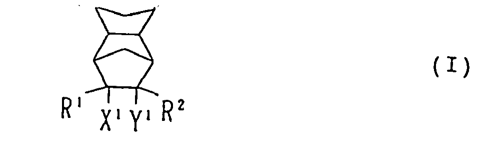 wherein R¹ and R² each represent a hydrogen atom or a hydrocarbon group having 1 to 10 carbon atoms; X¹ and Y¹ each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X¹ and Y¹; at least one of X¹ and Y' is a group other than groups selected from a hydrogen atom and hydrocarbons;
   R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p represents an integer of 0 to 3; and n represents an integer of 0 to 10.
2. A microporous membrane as described in the foregoing (1) in which said polymer comprises a ring opening copolymer represented by the following chemical formula (II): 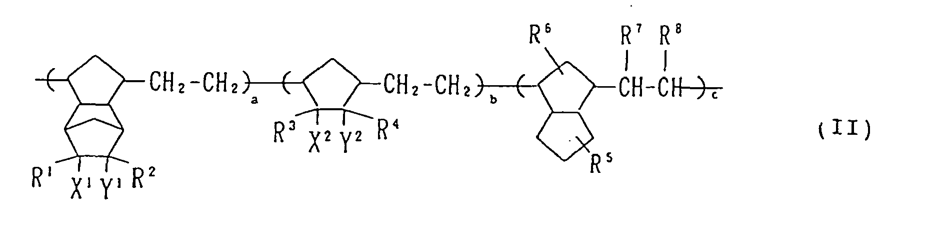 wherein R¹, R², X¹ and Y¹ each have the same meanings as defined in chemical formula (I); R³ to R⁵ each represent a hydrogen atom or a hydrocarbon group having 1 to 10 carbon atoms; R⁶ to R⁸ each represent a hydrogen atom or a hydrocarbon group having 1 to 6 carbon atoms; X² and Y² each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X² and Y²; at least one of X² and Y² is a group other than groups selected from a hydrogen atom and hydrocarbons;
   R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p is an integer of 0 to 3; n represents an integer of 0 to 10; a is an integer of 1 to 2000; b and c are integers of 1 to 2000, respectively; and in addition, a, b and c satisfy the following relations: 0<a/(a+b+c)<1, 0<b/(a+b+c)<1, and 0<c/(a+b+c)<1.
3. A process for producing a microporous membrane in which the polymer prepared by ring opening polymerization of a compound represented by the following chemical formula (I) is heated and dissolved in a solvent (a) in which said polymer is soluble, and the resulting solution is cast to form a membrane, rapidly cooled to separate the solution into two phases, a phase having high resin concentrations and a phase having low resin concentrations, then gelled, and extracted with a solvent (b) in which said polymer is insoluble to remove the solvent (a), thus to obtain a microporous membrane falling in the range of from 10 kPa to 1000 kPa in bubble point value measured by the use of ethanol by the method of ASTM F316: 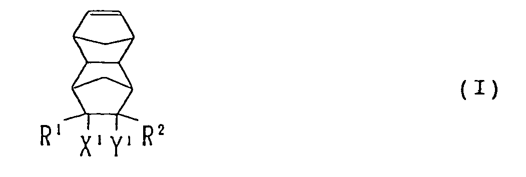 wherein R¹ and R² each represent a hydrogen atom or a hydrocarbon group having 1 to 10 carbon atoms; X¹ and Y¹ each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X¹ and Y¹; at least one of X¹ and Y¹ is a group other than groups selected from a hydrogen atom and hydrocarbons;
   R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p represents an integer of 0 to 3; and n represents an integer of 0 to 10.
4. The process for producing a microporous membrane as described in the foregoing (3) in which said polymer is a ring opening copolymer represented by the following chemical formula (II): 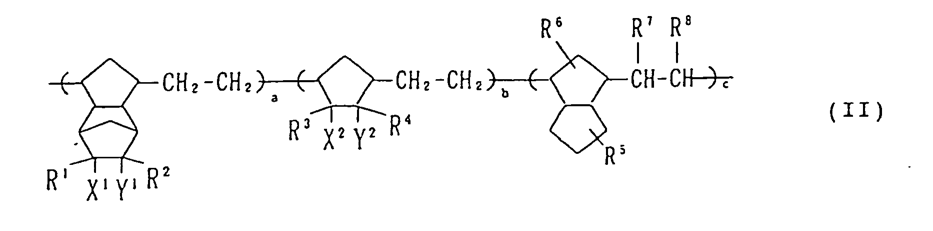
   In the formula, R¹, R², X¹ and Y¹ each have the same meanings as defined in chemical formula (I); R³ to R⁵ each represent a hydrogen atom or a hydrocarbon group having 1 to 10 carbon atoms; R⁶ to R⁸ each represent a hydrogen atom or a hydrocarbon group having 1 to 6 carbon atoms; X² and Y² each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X² and Y²; at least one of X² and Y² is a group other than groups selected from a hydrogen atom and hydrocarbons;
   R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p represents an integer of 0 to 3; n represents an integer of 0 to 10; a is an integer of 1 to 2000; and b and c are integers of 1 to 2000, respectively, and in addition, a, b, and c satisfy the following relations: 0<a/(a+b+c)<1, 0<b/(a+b+c)<1, and 0<c/(a+b+c)<1.
5. A process for producing a microporous membrane in which a polymer prepared by ring opening polymerization of a compound represented by the following chemical formula (I) is dissolved in a good solvent (c) for said polymer having a lower boiling point than water, a poor solvent (d) for said polymer having a higher boiling point than the good solvent (c) and water are added and the addition thereof is stopped immediately before a white turbidity or precipitate appears, the solution H comprising the polymer, the good solvent (c), the poor solvent (d) and water is cast on a support to form a membrane, and the solvents are slowly evaporated to cause phase separation in said solution, upon complete evaporation of the good solvent (c) the membrane gels, and the poor solvent (d) and water left are removed by heating, thus to obtain a microporous membrane falling in the range of from 10 kPa to 1000 kPa in bubble point value measured by the use of ethanol by the method of ASTM F316: 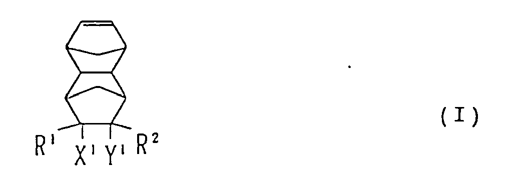 wherein R¹ and R² each represent a hydrogen atom or a hydrocarbon group having 1 to 10 carbon atoms; X¹ and Y¹ each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X¹ and Y¹; at least one of X¹ and Y¹ is a group other than groups selected from a hydrogen atom and hydrocarbons;
   R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p represents an integer of 0 to 3; and n represents an integer of 0 to 10.
6. A process for producing a microporous membrane as described in the foregoing (5) in which said polymer is ring opening copolymer represented by the following chemical formula (II): 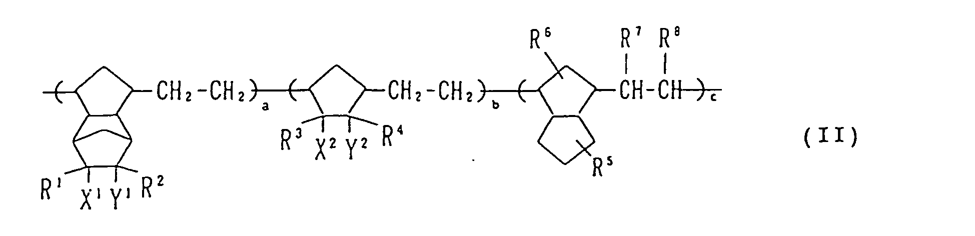 wherein R¹, R², X¹ and Y¹ each have the same meanings as defined by chemical formula (I); R³ to R⁵ each represent a hydrogen atom or a hydrocarbon group having 1 to 10 carbon atoms; R⁶ to R⁸ each represent a hydrogen atom or a hydrocarbon group having 1 to 6 carbon atoms; X² and Y² each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X² and Y²; at least one of X² and Y² is a group other than groups selected from a hydrogen atom and hydrocarbons;
   R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p represents an integer of 0 to 3; n represents an integer of 0 to 10; a is an integer of 1 to 2000; b and c are integers of 1 to 2000, respectively, and in addition, a, b, and c satisfy the following relations: 0<a/(a+b+c)<1, 0<b/(a+b+c)<1, and 0<c/(a+b+c)<1.

To prepare polymers by ring opening polymerization from the compounds represented by chemical formula (I) used in the present invention, for example, the polycyclic unsaturated ester compounds included in the compounds represented by chemical formula (I) undergo metathesis ring opening polymerization followed by hydrogenation as disclosed in JP-A-1-240517 (The term "JP-A" as used herein means an "unexamined published Japanese patent application"), JP-A-7-196736, JP-A-60-26024, or JP-A-62-19801.

The coexistence of an additional polymerizable component in the ring opening polymerization leads to formation of the copolymer. Such copolymerizable components include the polymerizable components represented by chemical formula (II).

Examples of these polymers or copolymers are norbornene resins. Some resins included therein are commercially available.

For example, a process for producing microporous membranes from norbornene resins is divided into two stages; a stage of dissolving the resins in solvents and a stage of stretching. The norbornene resins are put on the market by Japan Synthetic Rubber Co., Ltd. under the trade names of Arton G and Arton F and by Nippon Zeon Co., Ltd. under the trade name of Zeonex 250 and Zeonex 280.

Solvents used for forming the membranes by the solvent dissolution method are solvents (a) in which the norbornene resins are soluble. Examples of the solvents (a) include chain and cyclic hydrocarbons such as decane, decalin and cyclohexane, aromatic hydrocarbons such as xylene, naphthalene and toluene, phthalic esters such as dioctyl phthalate, dimethoxyoxyethyl phthalate and dimethyl phthalate, phosphoric esters such as triphenyl phosphate and tricresyl phosphate, polyhydric alcohol esters such as glycerol triacetate, ethyl phthalyl ethylglycollate and methyl phthalyl ethylglycollate, higher aliphatic alcohols such as stearyl alcohol and ceryl alcohol, mineral oils such as coal oil and kerosine, ketones such as methyl ethyl ketone and methyl isobutyl ketone, halogenated hydrocarbons such as methylene chloride, chloroform and 1,1-dichloroethane, and esters such as methyl acetate and ethyl acetate.

These solvents can be used alone-or as mixtures of two or.more kinds thereof.

When methylene chloride, toluene, or xylene is used as the solvent, a norbornene resin is dissolved in such a solvent in the coexistence of a poor solvent in which the solubility of the resins is low, such as stearyl alcohol, cetyl alcohol, or methylpyrrolidone, at near boiling points of the solvents mixed. A solvent such as ethanol, methanol, or water in which the norbornene resins are quite insoluble can be added in an amount of as little as 10% or less to the solution thus obtained.

The norbornene resin solution thus prepared is subjected to casting on a support such as glass plates, plastic films, or metal plates with the aid of an applicator so as to be 50 from 500 micrometers in thickness. When a low boiling solvent such as methylene chloride is used, the solvent is preferentially evaporated by exposing the solution membrane having undergone the casting to a gentle wind at about room temperature to cause phase separation in the solution, thus a microporous membrane being formed.

Furthermore, the solution membrane having undergone the casting is immersed in a solvent such as 2-propanol or ethanol in which the resin is quite insoluble to form a microporous membrane.

Next, a process for producing the norbornene resin microporous membranes by the use of solvents which can not dissolve norbornene resins at a temperature of 100°C or lower but can dissolve the resins at an increased temperature of 100°C or higher, for example, just at 200°C or higher, is described below. Examples of such solvents include phthalic esters such as dioctyl phthalate, higher aliphatic alcohols such as stearyl alcohol, mineral oils such as coal oil and kerosine, methylpyrrolidone, and 2-pyrrolidone.

A norbornene resin solution prepared by heating the resin to 220°C in the presence of an antioxidant (i.e., 2,6-di-t-butyl-p-cresol or tetrakis[methylene-3-(3,5-di-t-butyl-4-hydroxyphenyl)-propionate]methane) is stretched on a support such as glass plates, plastic films, or metal plates at 200°C so as to be 50 to 500 microns in thickness, and then rapidly cooled. For the rapid cooling, it is effective to throw the solution membrane together with the support into a liquid having a large heat capacity such as water, ethylene glycol, or butanol, or mixtures thereof. A temperature drop by the rapid cooling is usually from 20°C to 200°C, and preferably from 50°C to 150°C. The norbornene resin solution in which the resin has been dissolved in a solvent to keep an uniform solution is separated by the rapid cooling into two phases, a phase having high resin concentrations and a phase having low resin concentrations; and then gels.

The gel membrane is washed, for example, in isopropanol heated at 70°C to completely remove the solvent, thus producing a microporous membrane formed of the norbornene resin. It is quite necessary that washing solvents (b) for removing membrane-forming solvents (a) can dissolve the solvents (a) but not dissolve norbornene resins, and it is preferred that the solvents (b) have low boiling points. Examples of preferred solvents (b) are lower alcohols such as methanol, ethanol, or 2-propanol.

In order to produce the membranes, the solution described above is allowed to stream down through a die such as a slit having a narrow width in thin membrane form, and rapidly cooled to form a thin membrane.

The membrane which is freed of the solvents by washing is dried with the aid of heat. The membrane thus produced can be used for filtration of almost all solutions of acids, alkalis and oxidizing agents except for concentrated sulfuric acid and concentrated nitric acid.

For the production of the microporous membranes from the norbornene resins, in addition to the methods described above, there also is a method of dissolving the resins, not simply, but in a mixture of two kinds of solvents: one in which the resins are soluble and the other in which the resins are insoluble. This method facilitates the selection of microporous conditions of the membranes.

Good solvents (c) for the resins used in the solvent dissolution method (hereinafter occasionally referred to as "good solvents (c)") include chain and cyclic hydrocarbons such as heptane, hexane and cyclohexane, aromatic hydrocarbons such as benzene and toluene, ketones such as methyl ethyl ketone and acetone, halogenated hydrocarbons such as methyl chloride, chloroform and 1,1-dichloroethane, and esters such as methyl formate, methyl acetate and ethyl acetate. These good solvents (c) can be used alone or as mixtures of two or more kinds thereof. The good solvents (c) should be appropriately selected, depending on the kinds of substituent groups and polymerization degrees of the norbornene resins used. It is preferred that the good solvents (c) have lower boiling points than water, and particularly boiling points of 70°C or lower.

Poor solvents (d) for the resins used in the solvent dissolution method (hereinafter occasionally referred to as "poor solvents (c)") are preferably alcohols such as methanol, ethanol, 2-propanol, and butanol. It is necessary that a poor solvent (d) used has a higher boiling point than a good solvent (c) used in all cases.

After a norbornene resin is dissolved in a good solvent (c), a poor solvent (d) and water are slowly added to the solution with stirring. The addition thereof is stopped immediately before a white turbidity or precipitate appears. The content of the norbornene resins in the entire solution is from 5% to 20%, and preferably from 8% to 15%. The content of poor solvents (d) is from 15% to 30% in many cases. The content of water is from 1% to 5% at most. As a matter of course, the content of poor solvents (d) or water varies depending on the kinds of the norbornene resins or good solvents (c) used.

A norbornene resin dissolved in such mixed solvents is subjected to casting on a support such as glass plates, plastic films, or metal plates with the aid of an applicator so as to be from 50 to 500 micrometers in thickness, and the solution membrane thus produced is gently dried by exposing the membrane to a breeze at room temperature or a lower temperature. This leads to preferential evaporation of a low boiling good solvent (c) to cause phase separation in the solution. Further, the membrane gels by the complete evaporation of the good solvent (c) to form a microporous membrane. The poor solvents (d) and water left are removed by heating.

The microporous membrane thus produced can be used for the filtration of nearly all solutions of acids, alkalis, and oxidizing agents except for concentrated sulfuric acid and concentrated nitric acid.

The microporous membrane formed herein is isotropic.

When used for filtration, the microporous membranes produced in the present invention range from 10 kPa to 1000 kPa in the bubble point value measured by the use of ethanol. The bubble point value is measured by the test method of JIS K3832. Bubble point values measured by this method are nearly similar to those measured by the method of ASTM F316.

In the present invention, the bubble point value preferably falls in the range of from 10 kPa to 500 kPa, more preferably in the range of from 100 kPa to 300 kPa.

### BEST MODE FOR ATTAINING THE INVENTION

The present invention is illustrated below through the following examples. However, the invention is not limited by these examples.

### EXAMPLE 1

Fifteen parts of a norbornene resin (Arton^{™} G, manufactured by Japan Synthetic Rubber Co., Ltd.) were dissolved in 85 parts of dioctyl phthalate by heating at 120°C. This solution was subjected to casting on a stainless steel plate maintained at 100°C or above so as to be approximately 200 micrometers in thickness, and the resulting solution membrane were immediately thrown into water at 20°C to rapidly cool. The white membrane formed was washed in ethanol heated to 60°C for 1 hr and then taken out to dry. The bubble point value of this membrane measured by the use of ethanol (by the method of JIS K3832) was 60 kPa and the flow velocity of water permeability was 65 ml/cm²/min (differential pressure 0.1 MPa).

### EXAMPLE 2

Twelve parts of a norbornene resin (Arton^{™} G, manufactured by Japan Synthetic Rubber Co., Ltd.) were dissolved and kneaded in a mineral oil with a viscosity of 70 cP (40°C) at 220°C, and a membrane was extruded from an extruder die at 180°C, cooled in water at 24°C, washed in 2-propanol at 70°C for 2 hr, and then taken out to dry.

The bubble point value of this membrane measured by the use of ethanol was 120 kPa and the flow velocity of water permeability was 8 ml/cm²/min (differential pressure 0.1 MPa).

### EXAMPLE 3

Twenty parts of a norbornene resin (Arton^{™} G, manufactured by Japan Synthetic Rubber Co., Ltd.) were dissolved in 20 parts of toluene and 60 parts of N-methyl-2-pyrrolidone by heating at 70°C. The resulting solution was subjected to casting on a glass plate with the aid of an applicator, and the solution membrane together with the plate was immersed in ethanol for 1 hr. The membrane washed and dried was 330 kPa in ethanol bubble point (by the method of JIS K3832) and the flow velocity of water permeability was 1.8 ml/cm²/min (differential pressure 0.1 MPa).

### EXAMPLE 4

A solution comprising 12 parts of norbornene resin (Arton^{™} G, manufactured by Japan Synthetic Rubber Co., Ltd.), 65 parts of methylene chloride, 21 parts of methanol, and 2 parts of water was prepared, and stretched on a glass plate in thin layer form with the aid of an applicator. The resulting membrane was exposed to a breeze maintained at 25°C for about 1 hr to form a microporous membrane and further to a strong wind maintained at 60°C to dry.

The bubble point value of the membrane measured by the use of ethanol was 120 kPa and the flow velocity of water permeability was 7 ml/cm²/min (differential pressure 0.1MPa).

### INDUSTRIAL APPLICABILITY

In the present invention, the microporous membranes resist strong acids such as concentrated sulfuric acid and concentrated nitric acid, showing excellent resistance to chemicals. Furthermore, the microporosity of the membranes are suitable for filtration of liquids, and also for microfiltration thereof. In addition, the membranes introduce no problem of waste disposal.

The microporous membranes having the microporosity suitable for the microfiltration can be easily produced according to the process of the present invention.

## Claims

1. A microporous membrane which has a bubble point value measured by the use of ethanol by the test method of JIS K3832 falling in the range of from 10 kPa to 1000 kPa and is formed of a polymer prepared by ring opening polymerization of a compound represented by the following chemical formula (I): 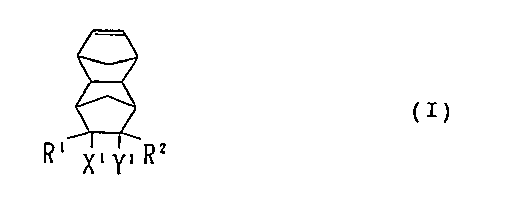 wherein R¹ and R² each represent a hydrogen atom or a hydrocarbon group having 1 to 10 carbon atoms; X¹ and Y¹ each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X¹ and Y¹; at least one of X¹ and Y¹ is a group other than groups selected from a hydrogen atom and hydrocarbons;
R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p represents an integer of 0 to 3; and n represents an integer of 0 to 10.

2. A microporous membrane as claimed in claim 1 in which said polymer comprises a ring opening copolymer represented by the following chemical formula (II): 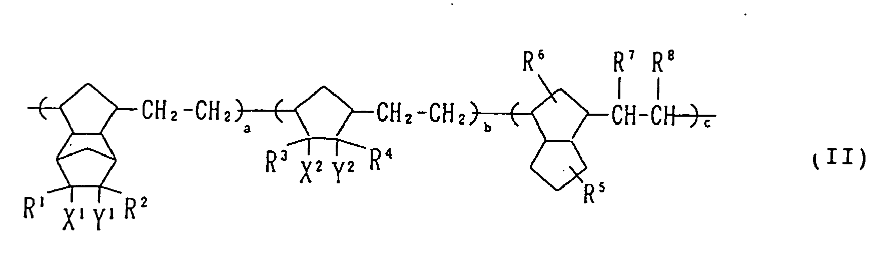 wherein R¹, R², X¹ and Y¹ each have the same meanings as defined in chemical formula (I); R³ to R⁵ each represent a hydrogen atom or a hydrocarbon group having 1 to 10 carbon atoms; R⁶ to R⁸ each represent a hydrogen atom or a hydrocarbon group having 1 to 6 carbon atoms; X² and Y² each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X² and Y²; at least one of X² and Y² is a group other than groups selected from a hydrogen atom and hydrocarbons;
R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p is an integer of 0 to 3; n represents an integer of 0 to 10; a is an integer of 1 to 2000; b and c are integers of 1 to 2000, respectively; and in addition, a, b and c satisfy the following relations: 0<a/(a+b+c)<1, 0<b/(a+b+c)<1, and 0<c/(a+b+c)<1.

3. A process for producing a microporous membrane in which the polymer prepared by ring opening polymerization of a compound represented by the following chemical formula (I) is heated and dissolved in a solvent (a) in which said polymer is soluble, and the resulting solution is cast to form a membrane, rapidly cooled to separate the solution into two phases, a phase having high resin concentrations and a phase having low resin concentrations, then gelled, and extracted with a solvent (b) in which said polymer is insoluble to remove the solvent (a), thus to obtain a microporous membrane falling in the range of from 10 kPa to 1000 kPa in bubble point value measured by the use of ethanol by the method of ASTM F316: 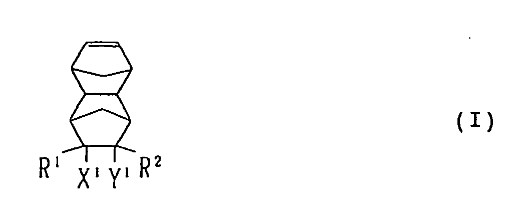 wherein R¹ and R² each represent a hydrogen atom or a hydrocarbon group having 1 to 10 carbon atoms; X¹ and Y¹ each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X¹ and Y¹; at least one of X¹ and Y¹ is a group other than groups selected from a hydrogen atom and hydrocarbons;
R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p represents an integer of 0 to 3; and n represents an integer of 0 to 10.

4. A process as claimed in claim 3 in which said polymer is a ring opening copolymer represented by the following chemical formula (II): 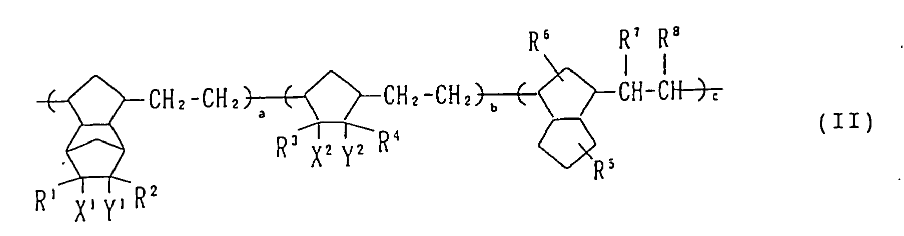 In the formula, R¹, R², X¹ and Y¹ each have the same meanings as defined in chemical formula (I); R³ to R⁵ each represent a hydrogen atom or a hydrocarbon group having 1 to 10 carbon atoms; R⁶ to R⁸ each represent a hydrogen atom or a hydrocarbon group having 1 to 6 carbon atoms; X² and Y² each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X² and Y²; at least one of X² and Y² is a group other than groups selected from a hydrogen atom and hydrocarbons;
R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p represents an integer of 0 to 3; n represents an integer of 0 to 10; a is an integer of 1 to 2000; and b and c are integers of 1 to 2000, respectively, and in addition, a, b, and c satisfy the following relations: 0<a/(a+b+c)<1, 0<b/(a+b+c)<1, and 0<c/(a+b+c)<1.

5. A process for producing a microporous membrane in which a polymer prepared by ring opening polymerization of a compound represented by the following chemical formula (I) is dissolved in a good solvent (c) for said polymer having a lower boiling point than water, a poor solvent (d) for said polymer having a higher boiling point than the good solvent (c) and water are added and the addition thereof is stopped immediately before a white turbidity or precipitate appears, the solution comprising the polymer, the good solvent (c), the poor solvent (d) and water is cast on a support to form a membrane, and the solvents are slowly evaporated to cause phase separation in said solution, upon complete evaporation of the good solvent (c) the membrane gels, and the poor solvent (d) and water left are removed by heating, thus to obtain a microporous membrane falling in the range of from 10 kPa to 1000 kPa in bubble point value measured by the use of ethanol by the method of ASTM F316: 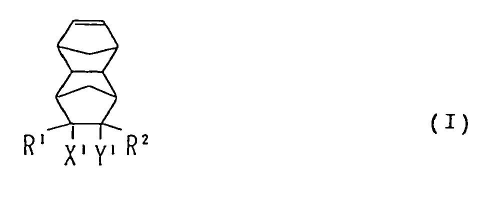 wherein R¹ and R² each represent a hydrogen atom or a hydrocarbon group having 1 to 10 carbon atoms; X¹ and Y¹ each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X¹ and Y¹; at least one of X¹ and Y¹ is a group other than groups selected from a hydrogen atom and hydrocarbons;
R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p represents an integer of 0 to 3; and n represents an integer of 0 to 10.

6. A process as claimed in claim 5 in which said polymer is ring opening copolymer represented by the following chemical formula (II): 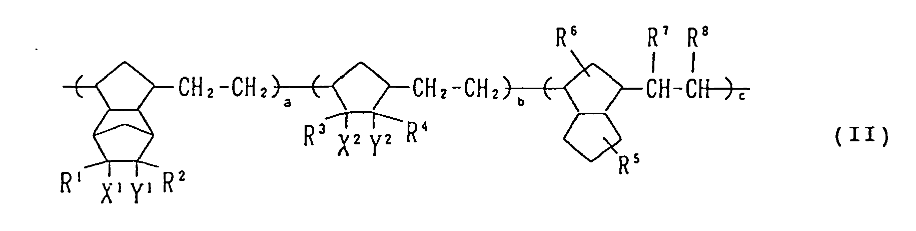 wherein R¹, R², X¹ and Y¹ each have the same meanings as defined by chemical formula (I); R³ to R⁵ each represent a hydrogen atom or a hydrocarbon group having 1 to 10 carbon atoms; R⁶ to R⁸ each represent a hydrogen atom or a hydrocarbon group having 1 to 6 carbon atoms; X² and Y² each represent a hydrogen atom, a hydrocarbon group having 1 to 10 carbon atoms, a halogen atom, a halogen-substituted hydrocarbon group having 1 to 10 carbon atoms, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, or (-CO)₂O or (-CO)₂NR¹⁴ formed by X² and Y²; at least one of X² and Y² is a group other than groups selected from a hydrogen atom and hydrocarbons;
R¹¹, R¹², R¹³ and R¹⁴ each represent a hydrocarbon group having 1 to 20 carbon atoms; Z represents a hydrocarbon group or a halogen-substituted hydrocarbon group; W represents SiR¹⁵ₚD₃₋ₚ; R¹⁵ represents a hydrocarbon group having 1 to 10 carbon atoms; D represents a halogen atom, -OCOR¹⁵, or -OR¹⁵; p represents an integer of 0 to 3; n represents an integer of 0 to 10; a is an integer of 1 to 2000; b and c are integers of 1 to 2000, respectively, and in addition, a, b, and c satisfy the following relations: 0<a/(a+b+c)<1, 0<b/(a+b+c)<1, and 0<c/(a+b+c)<1.

## Patentansprüche

1. Eine mikroporöse Membran, die einen unter Verwendung von Ethanol nach dem Testverfahren JIS K3832 gemessenen Blasenbildungspunktwert (bubble point value) hat, der in den Bereich von 10 kPa bis 1.000 kPa fällt, und die gebildet ist aus einem Polymer, das durch Ringöffnungspolymerisation einer Verbindung, dargestellt durch die folgende chemische Formel (I), hergestellt wurde: 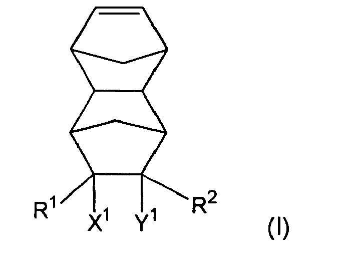 worin R¹ und R² je ein Wasserstoffatom oder eine Kohlenwasserstoffgruppe mit 1 bis 10 Kohlenstoffatomen darstellen; X¹ und Y¹ je ein Wasserstoffatom, eine Kohlenwasserstoffgruppe mit 1 bis 10 Kohlenstoffatomen, ein Halogenatom, eine halogensubstituierte Kohlenwasserstoffgruppe mit 1 bis 10 Kohlenstoffatomen, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, oder (-CO)₂O oder (-CO)₂NR¹⁴ gebildet durch X¹ und Y¹ darstellen; wenigstens eines aus X¹ und Y¹ eine Gruppe ist, die anders ist als Gruppen, ausgewählt aus einem Wasserstoffatom und Kohlenwasserstoffen;
R¹¹, R¹², R¹³ und R¹⁴ je eine Kohlenwasserstoffgruppe mit 1 bis 20 Kohlenstoffatomen darstellen; Z eine Kohlenwasserstoffgruppe oder eine halogensubstituierte Kohlenwasserstoffgruppe darstellt; W SiR¹⁵ₚD₃₋ₚ darstellt; R¹⁵ eine Kohlenwasserstoffgruppe mit 1 bis 10 Kohlenstoffatomen darstellt; D ein Halogenatom, -OCOR¹⁵ oder -OR¹⁵ darstellt; p eine ganze Zahl von 0 bis 3 darstellt; n eine ganze Zahl von 0 bis 10 darstellt.

2. Eine mikroporöse Membran wie in Anspruch 1 beansprucht, in der das Polymer ein durch Ringöffnung erhaltenes Copolymer, dargestellt durch die folgende chemische Formel (II), umfasst: 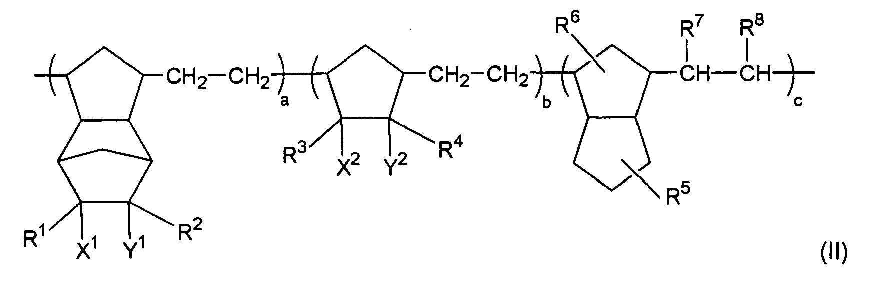 worin R¹, R², X¹ und Y¹ je dieselben Bedeutungen haben, wie in der chemischen Formel (I) definiert; R³ bis R⁵ je ein Wasserstoffatom oder eine Kohlenwasserstoffgruppe mit 1 bis 10 Kohlenstoffatomen darstellen; R⁶ bis R⁸ je ein Wasserstoffatom oder eine Kohlenwasserstoffgruppe mit 1 bis 6 Kohlenstoffatomen darstellen; X² und Y² je ein Wasserstoffatom, eine Kohlenwasserstoffgruppe mit 1 bis 10 Kohlenstoffatomen, ein Halogenatom, eine halogensubstituierte Kohlenwasserstoffgruppe mit 1 bis 10 Kohlenstoffatomen, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, oder (-CO)₂O oder (-CO)₂NR¹⁴ gebildet durch X² und Y² darstellen; wenigstens eines aus X² und Y² eine Gruppe ist, die anders ist als Gruppen, ausgewählt aus einem Wasserstoffatom und Kohlenwasserstoffen; R¹¹, R¹², R¹³ und R¹⁴ je eine Kohlenwasserstoffgruppe mit 1 bis 20 Kohlenstoffatomen darstellen; Z eine Kohlenwasserstoffgruppe oder eine halogensubstituierte Kohlenwasserstoffgruppe darstellt; W SiR¹⁵ ₚD₃₋ₚ darstellt; R¹⁵ eine Kohlenwasserstoffgruppe mit 1 bis 10 Kohlenstoffatomen darstellt; D ein Halogenatom, -OCOR¹⁵ oder -OR¹⁵ darstellt; p eine ganze Zahl von 0 bis 3 ist; n eine ganze Zahl von 0 bis 10 darstellt; a eine ganze Zahl von 1 bis 2.000 ist; b und c jeweils ganze Zahlen von 1 bis 2.000 sind; und zusätzlich a, b und c die folgenden Relationen erfüllen: 0<a/(a+b+c)<1, 0<b/(a+b+c)<1, und 0<c/(a+b+c)<1.

3. Ein Verfahren zum Herstellen einer mikroporösen Membran, in dem das Polymer, das durch Ringöffnungspolymerisation einer Verbindung hergestellt wurde, die durch die folgende chemische Formel (I) dargestellt ist, erwärmt und in einem Lösungsmittel (a) aufgelöst wird, in dem das Polymer löslich ist, und die resultierende Lösung gegossen wird, um eine Membran zu bilden, rasch abgekühlt wird, um die Lösung in zwei Phasen zu trennen, eine Phase mit hohen Harzkonzentrationen und eine Phase mit niedrigen Harzkonzentrationen, anschließend geliert und extrahiert wird mit einem Lösungsmittel (b), in dem das Polymer unlöslich ist, um das Lösungsmittel (a) zu entfernen, um folglich eine mikroporöse Membran zu erhalten, deren Blasenbildungspunktwert in einen Bereich von 10 kPa bis 1.000 kPa fällt, der unter Verwendung von Ethanol nach dem Verfahren ASTM F316 gemessen wurde: 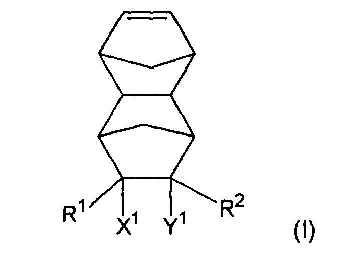 worin R¹ und R² je ein Wasserstoffatom oder eine Kohlenwasserstoffgruppe mit 1 bis 10 Kohlenstoffatomen darstellen; X¹ und Y¹ je ein Wasserstoffatom, eine Kohlenwasserstoffgruppe mit 1 bis 10 Kohlenstoffatomen, ein Halogenatom, eine halogensubstituierte Kohlenwasserstoffgruppe mit 1 bis 10 Kohlenstoffatomen, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, oder (-CO)₂O oder (-CO)₂NR¹⁴ gebildet durch X¹ und Y¹ darstellen; wenigstens eines aus X¹ und Y¹ eine Gruppe ist, die anders ist als Gruppen, ausgewählt aus einem Wasserstoffatom und Kohlenwasserstoffen;
R¹¹, R¹², R¹³ und R¹⁴ je eine Kohlenwasserstoffgruppe mit 1 bis 20 Kohlenstoffatomen darstellen; Z eine Kohlenwasserstoffgruppe oder eine halogensubstituierte Kohlenwasserstoffgruppe darstellt; W SiR¹⁵ₚD₃₋ₚ darstellt; R¹⁵ eine Kohlenwasserstoffgruppe mit 1 bis 10 Kohlenstoffatomen darstellt; D ein Halogenatom, -OCOR¹⁵ oder -OR¹⁵ darstellt; p eine ganze Zahl von 0 bis 3 ist; n eine ganze Zahl von 0 bis 10 darstellt;

4. Ein Verfahren wie in Anspruch 3 beansprucht, in dem das Polymer ein durch Ringöffnung erhaltenes Copolymer ist, dargestellt durch die folgende chemische Formel (II): 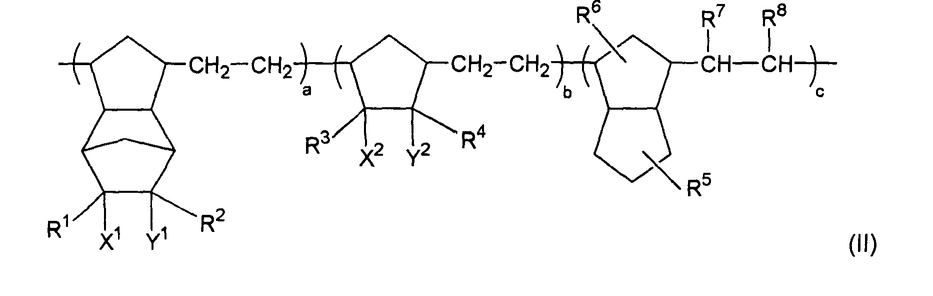 in der Formel haben R¹, R², X¹ und Y² je die selben Bedeutungen wie in der chemischen Formel (I) definiert; R³ bis R⁵ stellen je ein Wasserstoffatom oder eine Kohlenwasserstoffgruppe mit 1 bis 10 Kohlenstoffatomen dar; R⁶ bis R⁸ stellen je ein Wasserstoffatom oder eine Kohlenwasserstoffgruppe mit 1 bis 6 Kohlenstoffatomen dar; X² und Y² stellen je ein Wasserstoffatom, eine Kohlenwasserstoffgruppe mit 1 bis 10 Kohlenstoffatomen, ein Halogenatom, eine halogensubstituierte Kohlenwasserstoffgruppe mit 1 bis 10 Kohlenstoffatomen, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, oder (-CO)₂O oder (-CO)₂NR¹⁴ gebildet durch X² und Y² dar; wenigstens eines aus X² und Y² ist eine Gruppe, die anders ist als Gruppen, ausgewählt aus einem Wasserstoffatom und Kohlenwasserstoffen; R¹¹, R¹², R¹³ und R¹⁴ stellen je eine Kohlenwasserstoffgruppe mit 1 bis 20 Kohlenstoffatomen dar; Z stellt eine Kohlenwasserstoffgruppe oder eine halogensubstituierte Kohlenwasserstoffgruppe dar; W stellt SiR¹⁵ₚD₃₋ₚ dar; R¹⁵ stellt eine Kohlenwasserstoffgruppe mit 1 bis 10 Kohlenstoffatomen dar; D stellt ein Halogenatom, -OCOR¹⁵ oder -OR¹⁵ dar; p ist eine ganze Zahl von 0 bis 3; n stellt eine ganze Zahl von 0 bis 10 dar; a ist eine ganze Zahl von 1 bis 2.000; b und c sind jeweils ganze Zahlen von 1 bis 2.000; und a, b und c erfüllen zusätzlich die folgenden Relationen: 0<a/(a+b+c)<1, 0<b/(a+b+c)<1, und 0<c/(a+b+c)<1.

5. Ein Verfahren zum Herstellen einer mikroporösen Membran, in dem ein Polymer, hergestellt durch Ringöffnungspolymerisation einer Verbindung, die durch die folgende chemische Formel (I) dargestellt ist, in einem guten Lösungsmittel (c) für dieses Polymer aufgelöst wird, das einen niedrigeren Siedepunkt als Wasser hat, ein schlechtes Lösungsmittel (d) für das Polymer mit einem höheren Siedepunkt als das gute Lösungsmittel (c) und Wasser zugegeben werden und die Zugabe derselben sofort gestoppt wird, bevor eine weiße Trübung oder eine Ausfällung erscheint, wobei die Lösung, umfassend das Polymer, das gute Lösungsmittel (c), das schlechte Lösungsmittel (d) und Wasser, auf einen Träger gegossen wird, um eine Membran zu bilden, und die Lösungsmittel langsam verdunsten gelassen werden, um eine Phasentrennung in der Lösung zu verursachen, wobei nach vollständiger Verdunstung des guten Lösungsmittels (c) die Membran geliert und das schlechte Lösungsmittel (d) und übrig gebliebenes Wasser durch Erwärmen entfernt werden, um folglich eine mikroporöse Membran zu erhalten, deren Blasenbildungspunktwert in den Bereich von 10 kPa bis 1.000 kPa fällt, der unter Verwendung von Ethanol nach dem Verfahren ASTM F316 gemessen wurde: 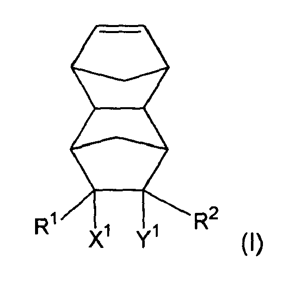 worin R¹ und R² je ein Wasserstoffatom oder eine Kohlenwasserstoffgruppe mit 1 bis 10 Kohlenstoffatomen darstellen; X¹ und Y¹ je ein Wasserstoffatom, eine Kohlenwasserstoffgruppe mit 1 bis 10 Kohlenstoffatomen, ein Halogenatom, eine halogensubstituierte Kohlenwasserstoffgruppe mit 1 bis 10 Kohlenstoffatomen, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, oder (-CO)₂O oder (-CO)₂NR¹⁴ gebildet durch X¹ und Y¹ darstellen; wenigstens eines aus X¹ und Y¹ eine Gruppe ist, die anders ist als Gruppen, ausgewählt aus einem Wasserstoffatom und Kohlenwasserstoffen;
R¹¹, R¹², R¹³ und R¹⁴ je eine Kohlenwasserstoffgruppe mit 1 bis 20 Kohlenstoffatomen darstellen; Z eine Kohlenwasserstoffgruppe oder eine halogensubstituierte Kohlenwasserstoffgruppe darstellt; W SiR¹⁵ ₚD₃₋ₚ darstellt; R¹⁵ eine Kohlenwasserstoffgruppe mit 1 bis 10 Kohlenstoffatomen darstellt; D ein Halogenatom, -OCOR¹⁵ oder -OR¹⁵ darstellt; p eine ganze Zahl von 0 bis 3 ist; n eine ganze Zahl von 0 bis 10 darstellt.

6. Ein Verfahren wie in Anspruch 5 beansprucht, in dem das Polymer ein durch Ringöffnung erhaltenes Copolymer ist, das durch die folgende chemische Formel (II) dargestellt ist: 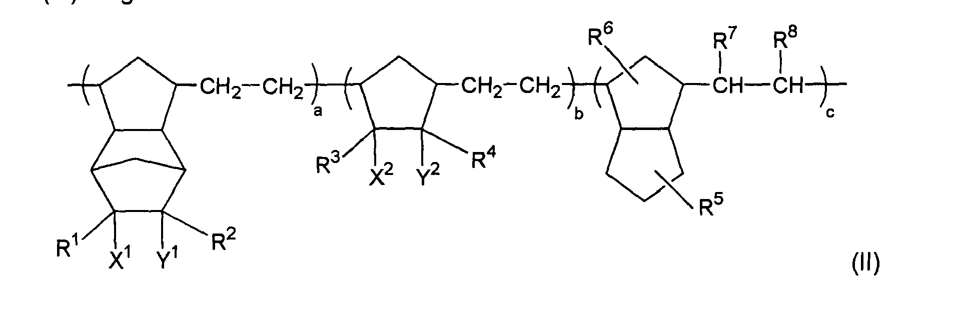 worin R¹, R², X¹ und Y¹ je dieselben Bedeutungen haben, wie für die chemische Formel (I) definiert; R³ bis R⁵ je ein Wasserstoffatom oder eine Kohlenwasserstoffgruppe mit 1 bis 10 Kohlenstoffatomen darstellen; R⁶ bis R⁸ je ein Wasserstoffatom oder eine Kohlenwasserstoffgruppe mit 1 bis 6 Kohlenstoffatomen darstellen; X² und Y² je ein Wasserstoffatom, eine Kohlenwasserstoffgruppe mit 1 bis 10 Kohlenstoffatomen, ein Halogenatom, eine halogensubstituierte Kohlenwasserstoffgruppe mit 1 bis 10 Kohlenstoffatomen, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, oder (-CO)₂O oder (-CO)₂NR¹⁴ gebildet durch X² und Y² darstellen; wenigstens eines aus X² und Y² eine Gruppe ist, die anders ist als Gruppen, ausgewählt aus einem Wasserstoffatom und Kohlenwasserstoffen; R¹¹, R¹², R¹³ und R¹⁴ je eine Kohlenwasserstoffgruppe mit 1 bis 20 Kohlenstoffatomen darstellen; Z eine Kohlenwasserstoffgruppe oder eine halogensubstituierte Kohlenwasserstoffgruppe darstellt; W SiR¹⁵ₚD₃₋ₚ darstellt; R¹⁵ eine Kohlenwasserstoffgruppe mit 1 bis 10 Kohlenstoffatomen darstellt; D ein Halogenatom, -OCOR¹⁵ oder -OR¹⁵ darstellt; p eine ganze Zahl von 0 bis 3 ist; n eine ganze Zahl von 0 bis 10 darstellt; a eine ganze Zahl von 1 bis 2.000 ist; b und c jeweils ganze Zahlen von 1 bis 2.000 sind; und zusätzlich a, b und c die folgenden Relationen erfüllen: 0<a/(a+b+c)<1, 0<b/(a+b+c)<1, und 0<c/(a+b+c)<1.

## Revendications

1. Membrane microporeuse qui a une valeur de point de bulle mesurée en utilisant l'éthanol par la méthode de test de JIS K3832 tombant dans la plage de 10 kPa à 1000 kPa et qui est formée d'un polymère préparé par polymérisation par ouverture de cycle d'un composé représenté par la formule chimique suivante (I) : 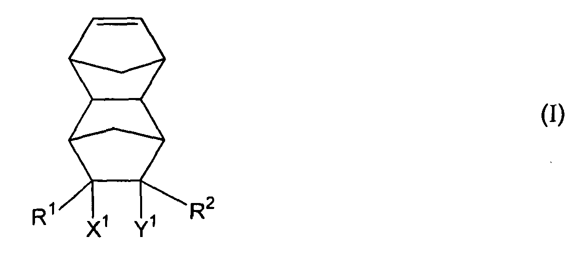 dans laquelle R¹ et R² représentent chacun un atome d'hydrogène ou un groupe hydrocarboné ayant 1 à 10 atomes de carbone ; X¹ et Y¹ représentent chacun un atome d'hydrogène, un groupe hydrocarboné ayant 1 à 10 atomes de carbone, un atome d'halogène, un groupe hydrocarboné à substitution halogène ayant 1 à 10 atomes de carbone, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, ou (-CO)₂O ou (-CO)₂NR¹⁴ formé par X¹ et Y¹ ; au moins un de X¹ et Y¹ est un groupe différent des groupes choisis parmi un atome d'hydrogène et des groupes hydrocarbonés ; R¹¹, R¹², R¹³ et R¹⁴ représentent chacun un groupe hydrocarboné ayant 1 à 20 atomes de carbone ; Z représente un groupe hydrocarboné ou un groupe hydrocarboné à substitution halogène ; W représente SiR¹⁵ₚD₃₋ₚ ; R¹⁵ représente un groupe hydrocarboné ayant 1 à 10 atomes de carbone ; D représente un atome d'halogène, -OCOR¹⁵, ou -OR¹⁵ ; p représente un nombre entier de 0 à 3 ; et n représente un nombre entier de 0 à 10.

2. Membrane microporeuse telle que revendiquée dans la revendication 1, dans laquelle ledit polymère comprend un copolymère obtenu par ouverture de cycle représenté par la formule chimique suivante (II) : 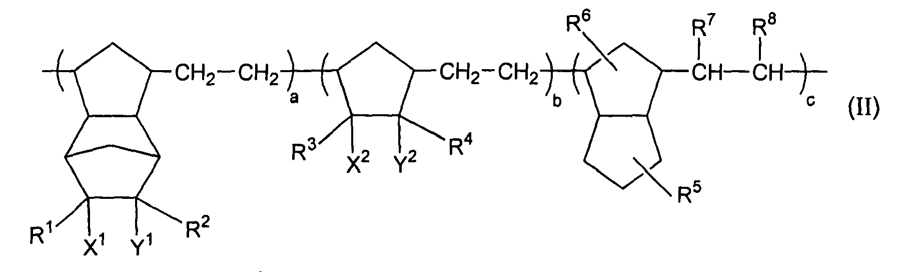 dans laquelle R¹, R², X¹ et Y¹ ont chacun les mêmes significations que celles définies dans la formule chimique (I) ; R³ à R⁵ représentent chacun un atome d'hydrogène ou un groupe hydrocarboné ayant 1 à 10 atomes de carbone, ; R⁶ à R⁸ représentent chacun un atome d'hydrogène ou un groupe hydrocarboné ayant 1 à 6 atomes de carbone ; X² et Y² représentent chacun un atome d'hydrogène, un groupe hydrocarboné ayant 1 à 10 atomes de carbone, un atome d'halogène, un groupe hydrocarboné à substitution halogène ayant 1 à 10 atomes de carbone, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, ou (-CO)₂O ou (-CO)₂NR¹⁴ formé par X² et Y² ; au moins un de X² et Y² est un groupe différent des groupes choisis parmi un atome d'hydrogène et des groupes hydrocarbonés ; R¹¹, R¹², R¹³ et R¹⁴ représentent chacun un groupe hydrocarboné ayant 1 à 20 atomes de carbone ; Z représente un groupe hydrocarboné ou un groupe hydrocarboné à substitution halogène ; W représente SiR¹⁵ₚD₃₋ₚ ; R¹⁵ représente un groupe hydrocarboné ayant 1 à 10 atomes de carbone ; D représente un atome d'halogène, -OCOR¹⁵, ou -OR¹⁵ ; p représente un nombre entier de 0 à 3 ; n représente un nombre entier de 0 à 10 ; a est un nombre entier de 1 à 2000 ; b et c sont des nombres entiers de 1 à 2000, respectivement ; et de plus, a, b et c répondent aux relations suivantes : 0 < a/(a+b+c) < 1, 0 < b/(a+b+c) < 1, et 0 < c/(a+b+c) < 1.

3. Procédé de production d'une membrane microporeuse dans laquelle le polymère préparé par polymérisation par ouverture de cycle d'un composé représenté par la formule chimique suivante (I) est chauffé et dissous dans un solvant (a) dans lequel ledit polymère est soluble, et la solution résultante est coulée pour former une membrane, rapidement refroidie pour séparer la solution en deux phases, une phase ayant des concentrations de résine élevées et une phase ayant des concentrations de résine basses, puis gélifiée, et extraite par un solvant (b) dans lequel ledit polymère est insoluble pour éliminer le solvant (a), pour obtenir ainsi une membrane microporeuse qui a une valeur de point de bulle tombant dans la plage de 10 kPa à 1000 kPa mesurée en utilisant l'éthanol par la méthode de ASTM F316 : 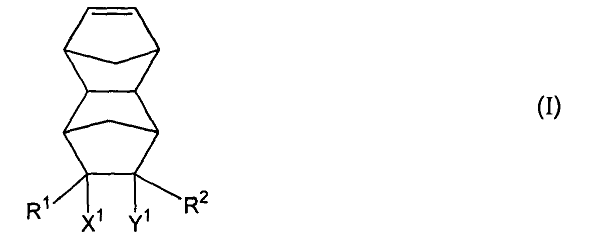 dans laquelle R¹ et R² représentent chacun un atome d'hydrogène ou un groupe hydrocarboné ayant 1 à 10 atomes de carbone ; X¹ et Y¹ représentent chacun un atome d'hydrogène, un groupe hydrocarboné ayant 1 à 10 atomes de carbone, un atome d'halogène, un groupe hydrocarboné à substitution halogène ayant 1 à 10 atomes de carbone, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, ou (-CO)₂O ou (-CO)₂NR¹⁴ formé par X¹ et Y¹ ; au moins un de X¹ et Y¹ est un groupe différent des groupes choisis parmi un atome d'hydrogène et des groupes hydrocarbonés ; R¹¹, R¹², R¹³ et R¹⁴ représentent chacun un groupe hydrocarboné ayant 1 à 20 atomes de carbone ; Z représente un groupe hydrocarboné ou un groupe hydrocarboné à substitution halogène ; W représente SiR¹⁵ₚD₃₋ₚ ; R¹⁵ représente un groupe hydrocarboné ayant 1 à 10 atomes de carbone ; D représente un atome d'halogène, -OCOR¹⁵, ou -OR¹⁵ ; p représente un nombre entier de 0 à 3 ; et n représente un nombre entier de 0 à 10.

4. Procédé tel que revendiqué dans la revendication 3, dans lequel ledit polymère est un copolymère obtenu par ouverture de cycle représenté par la formule chimique suivante (II) : 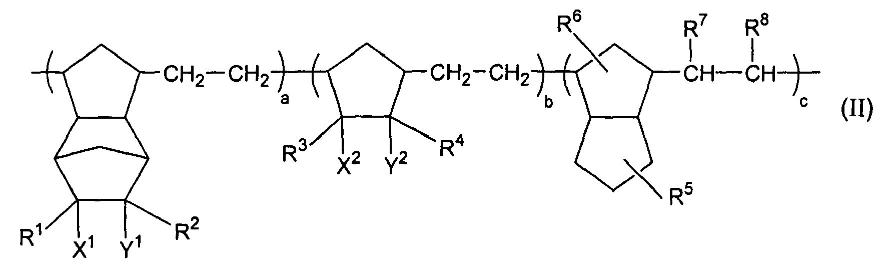 dans laquelle R¹, R², X¹ et Y¹ ont chacun les mêmes significations que celles définies dans la formule chimique (I) ; R³ à R⁵ représentent chacun un atome d'hydrogène ou un groupe hydrocarboné ayant 1 à 10 atomes de carbone, ; R⁶ à R⁸ représentent chacun un atome d'hydrogène ou un groupe hydrocarboné ayant 1 à 6 atomes de carbone ; X² et Y² représentent chacun un atome d'hydrogène ,un groupe hydrocarboné ayant 1 à 10 atomes de carbone, un atome d'halogène, un groupe hydrocarboné à substitution halogène ayant 1 à 10 atomes de carbone, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, ou (-CO)₂O ou (-CO)₂NR¹⁴ formé par X² et Y² ; au moins un de X² et Y² est un groupe différent des groupes choisis parmi un atome d'hydrogène et des groupes hydrocarbonés ; R¹¹, R¹², R¹³ et R¹⁴ représentent chacun un groupe hydrocarboné ayant 1 à 20 atomes de carbone ; Z représente un groupe hydrocarboné ou un groupe hydrocarboné à substitution halogène ; W représente SiR¹⁵ₚD₃₋ₚ ; R¹⁵ représente un groupe hydrocarboné ayant 1 à 10 atomes de carbone ; D représente un atome d'halogène, -OCOR¹⁵, ou -OR¹⁵ ; p représente un nombre entier de 0 à 3 ; n représente un nombre entier de 0 à 10 ; a est un nombre entier de 1 à 2000 ; b et c sont des nombres entiers de 1 à 2000, respectivement ; et de plus, a, b et c répondent aux relations suivantes : 0 < a/(a+b+c) < 1, 0 < b/(a+b+c) < 1, et 0 < c/(a+b+c) < 1.

5. Procédé de production d'une membrane microporeuse dans lequel un polymère préparé par polymérisation par ouverture de cycle d'un composé représenté par la formule chimique suivante (I) est dissous dans un bon solvant (c) pour ledit polymère ayant un point d'ébullition inférieur à celui de l'eau, un solvant faible (d) pour ledit polymère ayant un point d'ébullition supérieur à celui du bon solvant (c) et l'eau sont ajoutés et leur addition est arrêtée immédiatement avant qu'une turbidité blanche ou un précipité n'apparaisse, la solution comprenant le polymère, le bon solvant (c), le solvant faible (d) et l'eau est coulée sur un support pour former une membrane, et les solvants sont lentement évaporés pour provoquer la séparation de phases dans ladite solution, par évaporation complète du bon solvant (c) la membrane gélifie, et le faible solvant (d) et l'eau laissés sont éliminés par chauffage, pour obtenir ainsi une membrane microporeuse qui a une valeur de point de bulle tombant dans la plage de 10 kPa à 1000 kPa mesurée en utilisant l'éthanol par la méthode de ASTM F316 : 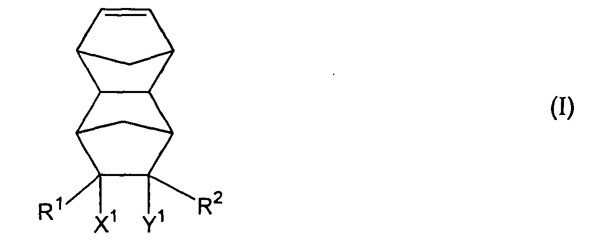 dans laquelle R¹ et R² représentent chacun un atome d'hydrogène ou un groupe hydrocarboné ayant 1 à 10 atomes de carbone ; X¹ et Y¹ représentent chacun un atome d'hydrogène, un groupe hydrocarboné ayant 1 à 10 atomes de carbone, un atome d'halogène, un groupe hydrocarboné à substitution halogène ayant 1 à 10 atomes de carbone, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, ou (-CO)₂O ou (-CO)₂NR¹⁴ formé par X¹ et Y¹ ; au moins un de X¹ et Y¹ est un groupe différent des groupes choisis parmi un atome d'hydrogène et des groupes hydrocarbonés ; R¹¹, R¹², R¹³ et R¹⁴ représentent chacun un groupe hydrocarboné ayant 1 à 20 atomes de carbone ; Z représente un groupe hydrocarboné ou un groupe hydrocarboné à substitution halogène ; W représente SiR¹⁵ₚD₃₋ₚ ; R¹⁵ représente un groupe hydrocarboné ayant 1 à 10 atomes de carbone ; D représente un atome d'halogène, -OCOR¹⁵, ou -OR¹⁵ ; p représente un nombre entier de 0 à 3 ; et n représente un nombre entier de 0 à 10.

6. Procédé tel que revendiqué dans la revendication 5, dans lequel ledit polymère est copolymère obtenu par ouverture de cycle représenté par la formule chimique suivante (II) : 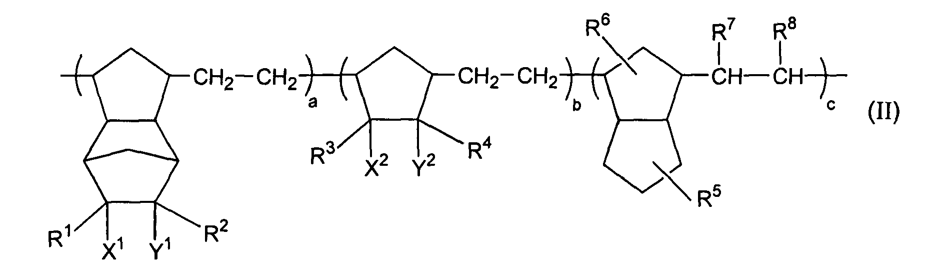 dans laquelle R¹, R², X¹ et Y¹ ont chacun les mêmes significations que celles définies dans la formule chimique (I) ; R³ à R⁵ représentent chacun un atome d'hydrogène ou un groupe hydrocarboné ayant 1 à 10 atomes de carbone, ; R⁶ à R⁸ représentent chacun un atome d'hydrogène ou un groupe hydrocarboné ayant 1 à 6 atomes de carbone ; X² et Y² représentent chacun un atome d'hydrogène, un groupe hydrocarboné ayant 1 à 10 atomes de carbone, un atome d'halogène, un groupe hydrocarboné à substitution halogène ayant 1 à 10 atomes de carbone, -(CH₂)ₙCOOR¹¹, -(CH₂)ₙCN, -(CH₂)ₙCONR¹¹R¹², -(CH₂)ₙCOOZ, -(CH₂)ₙOZ, -(CH₂)ₙW, ou (-CO)₂O ou (-CO)₂NR¹⁴ formé par X² et Y² ; au moins un de X² et Y² est un groupe différent des groupes choisis parmi un atome d'hydrogène et des groupes hydrocarbonés ; R¹¹, R¹², R¹³ et R¹⁴ représentent chacun un groupe hydrocarboné ayant 1 à 20 atomes de carbone ; Z représente un groupe hydrocarboné ou un groupe hydrocarboné à substitution halogène ; W représente SiR¹⁵ₚD₃₋ₚ ; R¹⁵ représente un groupe hydrocarboné ayant 1 à 10 atomes de carbone ; D représente un atome d'halogène, -OCOR¹⁵, ou -OR¹⁵ ; p représente un nombre entier de 0 à 3 ; n représente un nombre entier de 0 à 10 ; a est un nombre entier de 1 à 2000 ; b et c sont des nombres entiers de 1 à 2000, respectivement ; et de plus, a, b et c répondent aux relations suivantes : 0 < a/(a+b+c) < 1, 0 < b/(a+b+c) < 1, et 0 < c/(a+b+c) < 1.
